# EUROPÄISCHE PATENTSCHRIFT

(11) **EP 2 989 498 B1**
(45) Veröffentlichungstag und Bekanntmachung des Hinweises auf die Patenterteilung: **08.11.2023**
(21) Anmeldenummer: 14723738.2
(22) Anmeldetag: 23.04.2014
(51) Int. Cl.: G02B 6/44, H02G 15/04

(54) **ENDKAPPE FÜR EIN VERLEGEROHR**
END CAP FOR A CONDUIT PIPE
CAPUCHON D'EXTRÉMITÉ POUR TUBE DE POSE

(30) Priorität: 25.04.2013 DE 102013104206; 01.08.2013 EP 13178960; 28.10.2013 DE 102013111835
(43) Veröffentlichungstag der Anmeldung: 02.03.2016
(73) Patentinhaber: Stark, Elena, 85247 Schwabhausen (DE)
(72) Erfinder: Stark, Elena, 85247 Schwabhausen (DE)
(74) Vertreter: Wittmann, Ernst-Ulrich
(86) Internationale Anmeldenummer: PCT/EP2014/058221
(87) Internationale Veröffentlichungsnummer: WO 2014/173938

(56) Entgegenhaltungen:
- WO-A1-2012/107302
- WO-A2-2006/081541
- DE-A1- 19 632 476
- GB-A- 1 217 739
- JP-A- 2000 333 345
- US-A- 3 761 602
- US-A- 4 808 772
- US-A1- 2010 178 022

## Beschreibung

Die Erfindung betrifft eine Endkappe zum wenigstens teilweisen Abdecken eines

Rohrs. Insbesondere ist die erfindungsgemäße Endkappe geeignet, bei einem Glasfaser-Verlegerohr an der Ein- bzw. Austrittsstelle zu einem Verteilerkasten für Glasfaserbasierte Kommunikationsanlagen einen definierten Eintritt der Glasfasern in den Verteilerkasten zu gewährleisten.

Derartige Verteilerkästen haben die Aufgabe, eine Schnittstelle zu bilden, entweder zwischen Weitverkehrsnetzen von Glasfasern oder zwischen einem Weitverkehrsnetz und einem oder mehreren Teilnetzen, die ein oder mehrere Häuser versorgen.

Im Stand der Technik werden zunächst die Glasfaser-Verlegerohre - die auf Grund ihrer Farbmarkierung gut voneinander zu unterscheiden sind - verlegt und anschließend werden in diese Rohre die Glasfasern mittels Druckluft eingebracht.

Die Glasfasern kommen dann also im Verteilerkasten an und können dort nach Bedarf verbunden werden. Glasfaser-Verlegerohre, die verlegt wurden, aber noch nicht benötigt werden, werden am Verteilerkasten mit einer Kappe abgeschlossen, um u.a. das Eindringen von Schmutz und Feuchtigkeit zu verhindern. Es gibt also zwei Arten von Endkappen, die in einem Verteilerkasten benötigt werden: Geschlossene Endkappen, um die unbenutzten Glasfaser-Verlegerohre zu schützen, und offene Endkappen, durch welche die Glasfaser-Kabelstränge in den Verteilerkasten gezogen werden.

Für derartige Endkappen werden im Stand der Technik häufig Druckluftkupplungen bzw. entsprechende Abschlussstücke verwendet. Diese aus der Drucklufttechnik stammenden Teile sind jedoch verhältnismäßig teuer. Da sie für längeren Betrieb und höhere Drücke ausgelegt sind, müssen sie recht präzise gefertigt werden. Weiterhin bestehen diese Druckluftkupplungen in der Regel aus teureren Materialien wie z.B. Messing oder Edelstahl. Darüberhinaus sind die Außendurchmesser dieser Teile, relativ zu ihrem Innendurchmesser, ziemlich groß. Dadurch werden die Verteilerkästen unnötig groß bzw. die Kabelzuführungen werden zum Engpass beim Platzbedarf. Außerdem sind diese Druckluftkupplungen aufwändig zu montieren, weil sie in dieser beengten Situation schlecht zu handhaben sind. Beispielsweise müssen sie zum Lösen die am unteren Ende angeordnete Arretierring angehoben werden und das ist selbst mit Schnabelzangen oder Spezialwerkzeugen in dieser beengten Situation nur schwer, d.h. mit Kraftaufwand und relativ viel Geschicklichkeit zu bewerkstelligen. Endkappen für Verlegerohre und auch Kabel wie Glasfaserkabel sind aus der DE196 32 471, der GB12 177 93, der JP2000 333345, der WO2012107302 und der US2010178022 bekannt.

Ausgehend von diesem Stand der Technik ist es Aufgabe der vorliegenden Erfindung, zumindest einige Nachteile des Stands der Technik wenigstens teilweise zu überwinden bzw. zu verbessern.

Die Aufgabe wird mit einer Vorrichtung gemäß Anspruch 1 gelöst. Bevorzugte Ausführungsformen und Abwandlungen sind Gegenstand der Unteransprüche.

Die erfindungsgemäße Endkappe, zum wenigstens teilweise Abdecken eines Rohrs, insbesondere eines Glasfaser-Verlegerohrs hat eine im wesentlichen zylindrische Grundform, die entlang ihrer Längsachse einen innenliegenden, zylindrischen Aufnahmeabschnitt mit einer endseitigen Stirnfläche und einen Bedienkopf aufweist. Der Aufnahmeabschnitt, in welchen das abzudeckende bzw. abzuschließende Rohr einführbar ist, hat mindestens eine seitliche Schlitzung und auf der Innenseite wenigstens ein Element einer Formschlussverbindung, welches zur Wechselwirkung mit dem abzudeckenden Rohr dient.

Als Formschlussverbindung wird hierbei eine Verbindungsart verstanden, bei welcher die beiden im Wesentlichen zueinander koaxial angeordneten Bauteile (Endkappe und Rohr) durch wenigstens ein Element so miteinander verbunden werden, dass eine unbeabsichtigte Trennung der beiden möglichst vermieden wird. Dies erfolgt beispielsweise mittels wenigstens einer Grippverbindung, Rastverbindung,

Stiftverbindung, Keilverbindung, Zahnverbindung, Kombinationen hiervon oder dergleichen, wobei es ausreicht, dass die einzelnen Elemente der Verbindung nur an einer Oberfläche (z.B. der Innenseite des Aufnahmeabschnittes) angeordnet sind und ferner derart ausgeführt sind, dass diese wenigstens teilweise in die Oberfläche des angrenzenden Bauteils (Rohr) eingreifen. Ein mögliches Beispiel hierfür kann ein selbstschneidendes Gewinde im Aufnahmeabschnitt sein, welches in die Oberfläche des Rohrs eingreift, hier einen Gewindegang einschneidet und so ein unbeabsichtigtes Lösen verhindert. Trotzdem ist es dann möglich, die Endkappe durch Drehung über den Gewindegang bei Bedarf von dem Rohr zu lösen. Entsprechend können auch Grippverbindungen aufgebaut sein, wobei diese dann selbstverständlich keinen Gewindegang, sondern nur Strukturelemente in die gegenüberliegende Oberfläche einbringen.

Die erfindungsgemäße Endkappe lässt sich somit, entlang ihrer Längsachse, in einen innenliegenden, zylindrischen Aufnahmeabschnitt, der mit einer endseitigen Stirnfläche abgeschlossen ist, und in einen Bedienkopf, der u.a. dazu dienen kann, Montage-Werkzeuge aufzunehmen oder der eine Angriffsfläche für händische Bedienung bietet, gliedern.

Der Aufnahmeabschnitt weist eine seitliche Schlitzung und ein Innengewinde auf. Dabei sorgt die seitliche Schlitzung u.a. für eine gewisse Elastizität der Endkappe, damit diese gut auf das Glasfaser-Verlegerohr angepasst werden kann. Diese gute Passung kann weiterhin dadurch verbessert werden, dass sie mit einem Spannring umgeben wird. Für die günstige Anordnung eines solchen Spannrings ist in einer weiteren, erfindungsgemäßen Ausführungsform der Endkappe eine außenliegende, umlaufende Nut vorgesehen, welche u.a. ein Verrutschen des Spannrings, welcher auch als Sprengring ausgeführt sein kann, verhindert. Dieser Spannring kann vorzugsweise aus Metall oder Kunststoff, bevorzugt aus einem elastischen Kunststoff ausgeführt werden.

Entsprechend der vorliegenden Erfindung erstreckt sich die seitlich angeordnete Schlitzung nur teilweise über die Mantelhöhe der Endkappe und weist im Bereich des Schlitzendes im Mantel eine Entspannungsbohrung auf, mit welcher sich u.a. die Elastizität der Stege weiter beeinflussen lässt. Besonders von Vorteil ist bei einer solchen Ausführungsform, dass zum einen eine relativ hohe Dichtigkeit im montierten Zustand (bis zu 1 Mpas) erreicht wird und zum anderen die Endkappe rohrherstellerunabhängig eingesetzt werden kann. Darüber hinaus erzielt man durch das Zusammenspiel der speziellen "Grippverzahnung" - auch in Form eines "Grippgewindes" - mit der Schlitzung und der dazugehörigen Entspannungsbohrung hohe Auszugskräfte bzw. eine hohe Haltekraft für das in der Endkappe aufgenommene Rohr.

Mit der Schlitzung und der Entspannungsbohrung wird eine Endkappe mit einer hohen Haltekraft bereitgestellt, die u.a. auch einfach auf die Bedürfnisse der Endanwender angepasst werden kann. Eine Veränderung der Schlitzungslänge und/oder Schlitzungsbreite und/oder des Bohrdurchmessers haben unmittelbaren Einfluss auf die Eigenschaften der Auszugskräfte / Haltekräfte. Des Weiteren erhält man durch eine Veränderung der Schlitzungslänge und/oder Schlitzungsbreite und/oder des Bohrdurchmessers die Möglichkeit auf die unterschiedlichen Fertigungstoleranzen der Rohrhersteller zu reagieren, da mit einer entsprechenden Einstellung der vorgenannten Aspekte diese Fertigungstoleranzen bei der Herstellung der Endkappen (u.a. durch die Elastizität der Stege zwischen den Schlitzungen) berücksichtigt werden können.

Gemäß der vorliegenden Erfindung, weist die Hülse eine vollständige seitliche Schlitzung auf. Mit Hilfe dieser Schlitzung ist es u.a. möglich, die Endkappe auch für Systeme und Rohre zu verwenden, bei welchen bereits Glasfaserkabel eingezogen sind und eine geschlossene Form der Hülse nicht verwendet werden kann. Entsprechend ausgeformte Hülsen mit einer durchgehenden Schlitzung weisen gemäß einer weiteren, bevorzugten Ausführungsform der vorliegenden Erfindung auch vorzugsweise weniger Teilschlitzungen auf, da die entsprechenden Hülsen mit durchgehender Schlitzung biegsamer sind und damit ggf. auch nur eine weitere Teilschlitzung ausreichend sein kann. Grundsätzlich ist die Dimension der Schlitzung so gestaltet, dass diese größer ist als der Durchmesser des einzulegenden Kabels.

Gemäß einer weiteren Ausführungsform der vorliegenden Erfindung ist das Element der Formschlussverbindung im Aufnahmeabschnitt ein Innengewinde. Auch liegt es im Sinn der vorliegenden Erfindung, dass zwei, drei oder eine Vielzahl von Innengewinden vorgesehen sind. Diese können darüber hinaus ein- oder mehrgängigen Innengewinde sein. Ferner ist das Innengewinde gemäß einer weiteren, besonders bevorzugten Ausführungsform als selbstschneidendes Gewinde ausgebildet.

Das Innengewinde im Bereich des Aufnahmeabschnitts sorgt dafür, dass die Endkappe ohne weitere Vorbereitung direkt auf das Verlegerohr aufgeschraubt werden kann. Dafür ist es besonders günstig, das genannte Gewinde als selbstschneidendes Gewinde zu gestalten. Je nach geforderter Haltekraft können ein oder mehrere Innengewinde im Aufnahmeabschnitt angeordnet sein. Diese Innengewinde können ferner auch als ein- oder als mehrgängige Gewinde gestaltet sein. Um einen guten Abschluss des Glasfaser-Verlegerohrs zu erreichen, wird die Endkappe soweit eingeschraubt, dass dieses Glasfaser-Verlegerohr an der Stirnfläche des Aufnahmeabschnitts ansteht. Dabei kann die Formschlussverbindung durch Verbindungselemente im Aufnahmeabschnitt oder im Aufnahmeabschnitt und in der äußeren Kontur des abzudeckenden Rohrs bewirkt werden. Bei Ersterem ist das Verbindungselement im Aufnahmeabschnitt so gestaltet, dass es vorzugsweise in der Oberfläche des einzuführenden Rohrs ein Gegenelement eindringt (einschneidet). Entsprechend der zweiten Alternative sind auf beiden sich gegenüberliegenden Oberflächen korrespondierende Elemente einer Formschlussverbindung angeordnet und stellen so die Fixierung der Endkappe auf dem Rohr sicher.

Entsprechend einer weiteren alternativen Ausführungsform weist der Aufnahmeabschnitt einen Innendurchmesser auf, welcher zwischen 4 mm und 12 mm, insbesondere zwischen 6 mm und 9 mm beträgt.

Um die Dichtigkeit weiter zu erhöhen, ist an der genannten Stirnfläche ein

Dichtelement angeordnet. Mit diesem Dichtelement, welches als Scheibe,

Kegel, Kegelstumpf (mit/ohne Loch) oder als Ring ausgestaltet sein kann, besteht ferner auch die Möglichkeit eine erfindungsgemäße Endkappe mit einer Öffnung zum Durchführen eines Glasfaserkabels im Bedienkopf für zwei Varianten (d.h. geschlossene oder teilweise geöffnete Endkappe) zu verwenden. So kann bei einer mit Öffnung versehenen Endkappenversion durch das Einlegen der Dichtungsscheibe die Öffnung verschlossen und somit eine ausreichende Abdichtung auch dieser Endkappe bereitgestellt werden.

Durch diese Anordnung ergibt sich der erfindungsgemäße Vorteil, dass die Endkappe weder zu Montage noch zur Demontage angehoben werden muss bzw. eine Zugänglichkeit zur Aufnahmeöffnung des Rohrs nicht notwendig ist. Dabei ist für das Lösen der Endkappe relativ wenig Kraft aufzubringen und auch ist deutlich weniger Geschicklichkeit des Bedieners, insbesondere aufgrund der verbesserten Zugänglichkeit notwendig.

Insbesondere in Bezug auf die durchgehend geschlitzte Ausführung ist es ferner notwendig, auch hierfür eine Dichtung bereit zu stellen. Hierzu wird gemäß oinor der vorliegenden Erfindung eine Dichtung bereit gestellt, welche wenigstens Teile der durchgehenden Schlitzung innerhalb der Mantelkontur verschließt und ggf. auch der Mantelinnenkontur im Anschluss an die durchgehende Schlitzung angepasst ist. Darüber hinaus weist eine solche Dichtung auch einen zylindrischen Abschnitt auf, welcher im Bereich der innenliegenden Stirnfläche des zylindrischen Aufnahmeabschnitts angeordnet ist. Hierüber ist insbesondere die Dichtung fixierbar. Dabei kann dieser Abschnitt der Dichtung auch Ausnehmungen aufweisen, damit ein Aufstecken der Dichtung in Kombination mit der vollständig geschlitzten Hülse möglich ist und ein Glasfaserkabel teilweise aufnehmbar bzw. fixierbar ist.

Die konzentrisch angeordnete Öffnung der Endkappe in der geöffneten Version, kann gemäß einer weiteren besonders bevorzugten Ausführungsform mit einem Knickschutz ausgestattet sein, wie diese beispielsweise als Knickschutztüllen bekannt sind. Darüber hinaus kann der Knickschutz auch in Form einer als Trichter geformten Öffnung (Knickschutztrichter) realisiert werden, dessen Innenkontur vorzugsweise wenigstens in Abschnitten konvex ausgestaltet und/oder einen vorgegebenen Biegeradius aufweist. Darüber hinaus kann der Knickschutztrichter derart ausgeformt werden, dass auch die Übergänge zwischen Innenkontur und Außenkontur der Endkappe stetig verlaufen, so dass insbesondere im Übergang kein Kante auftritt, an welcher ein Kabel, dass durch die Öffnung geführt wird, beschädigt werden könnte. Dabei ist die Kontur des Knickschutztrichters so gewählt, dass bei Anliegen eines beispielsweise Glasfaserkabels ein Knicken des Kabels weitgehend verhindert wird und somit ein Knickschutz bereitgestellt wird, der nicht aus der Öffnung der Hülse selbst hervorragt. Gegebenenfalls kann ein solcher Knickschutz auch mit anderen Maßnahmen (Knickschutztüllen) zum Verhindern eines Abknickens des durchgeführten Kabels kombiniert werden.

Die äußere Oberfläche des Bedienkopfs kann so ausgestattet sein, dass die Endkappe besonders einfach - selbst bei beengten Raumverhältnissen, wie sie am Rande eines Verteilerkastens häufig sind - aufgeschraubt werden kann. Deshalb ist es vorteilhaft, die Endkappe entweder mit einer Rändelung zu versehen, so dass sie händisch aufgeschraubt werden kann, oder mit außenliegenden Abflachungen auszubilden, beispielsweise auch als Sechskant, um die Endkappe mit einem Gabelschlüssel oder einem Sechskant-Steckschlüssel zu montieren. Selbstverständlich funktioniert der Bedienkopf auch ohne solche zusätzlichen Merkmale, wobei diese den Bedienkomfort erhöhen können.

Besonders vorteilhaft ist es, Aufnahmen für Werkzeuge am Ende des Bedienkopfs vorzusehen, die auch bei beengten Raumverhältnissen gut betätigt werden können. Dafür ist beispielsweise eine mehreckige Vertiefung günstig, die einen Inbus- oder Torx-Schüssel oder dergleichen aufnehmen kann. Zu diesem Zweck kann auch die konzentrische Öffnung der Endkappe mehreckig gestaltet sein. Sehr vorteilhaft ist es, zwei oder mehr Löcher, insbesondere Sacklöcher, vorzusehen, die sehr einfach und kostengünstig durch Bohren herzustellen sind und die mit einem Zapfenschlüssel mit zwei bzw. mit mehreren Zapfen betätigt werden können.

Die erfindungsgemäße Endkappe kann aus einem eher preiswerten Material gefertigt sein, beispielsweise aus einem harten Kunststoff, wie z.B. aus Polypropylen oder Polyvinylchlorid, oder aus einem Metall, beispielsweise aus einer Stahllegierung oder aus Aluminium, insbesondere aus hocheloxiertem Aluminium. Hierbei sollte vorzugsweise sichergestellt werden, dass das verwendete Material insbesondere im Bereich des selbstschneidenden Innengewindes ausreichend hart ist, damit ein Einschneiden der Rohrwandung ermöglicht wird. Weiterhin ist die erfindungsgemäße Endkappe in ihrer Herstellung besonders einfach, da sie - im Gegensatz zu Lösungen nach dem Stand der Technik, z.B. Druckluftkupplungen - keine beweglichen Teile enthalten muss.

Die Erfindung umfasst darüber hinaus auch die Verwendung der erfindungsgemäßen Endkappe für eine Glasfaser-Verlegerohrs, bevorzugt zum teilweise oder vollständigen Abschluss eines Endabschnitts des Glasfaser-Verlegerohrs und vorzugsweise zur Zugentlastung und/oder zum Knickschutz von Lichtwellenleiterkabeln bzw. zur Abdichtung eines Mantels für Lichtwellenleiterkabel oder eines entsprechenden Rohrs.

Nachfolgend wird die Erfindung anhand verschiedener Ausführungsformen beschrieben, wobei darauf hingewiesen wird, dass die Erfindung nicht auf die hier dargestellte Ausführung beschränkt ist, sondern durch die Ansprüche definiert wird.

Dabei zeigen:
Fig. 1: eine erste nicht erfindungsgemäße Endkappe in perspektivischer Ansicht;
Fig. 2: einen schematischen Längsschnitt durch die Endkappe der Fig.1;
Fig. 3: eine weitere nicht erfindungsgemäße Endkappe in perspektivischer Ansicht Fig. 4 eine weitere Ansicht der Endkappe nach Fig. 3;
Fig. 5a und 5b: eine Ausführungsform mit durchgehender Längsschlitzung in perspektivischer und Frontansicht;
Fig. 6: die Alternative entsprechend den Figuren 5a, 5b mit eingelegter Dichtung bzw. seitlichem Abschluss, und
Fig. 7: die Dichtung bzw. den seitlichen Abschluss aus Fig. 6 im Detail,
Fig. 8 bis 10: eine weitere nicht erfindungsgemäße Darstellung für eine formschlüssige Fixierung eines Rohrs mit Grippelementen.

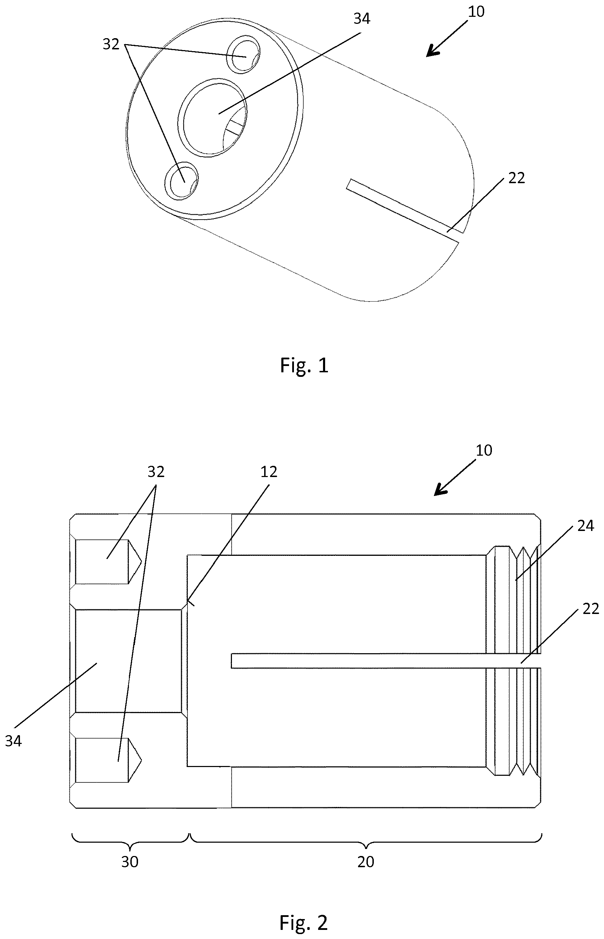

Figur 1 zeigt eine perspektivische Ansicht einer Endkappe 10.

Dabei ist die zylindrische Grundform der Endkappe 10 und eine seitliche Schlitzung 22 gut erkennbar. Es ist hier eine konzentrische Öffnung 34 gezeigt; eine nicht erfindungsgemäße Ausführungsform ohne diese Öffnung eignet sich besonders, um Verlegerohre abzuschließen. Weiterhin sind zwei Sacklöcher 32 erkennbar, in die ein Zapfenschlüssel mit zwei Zapfen eingesetzt werden kann und mit denen die Endkappe 10 auch bei beengten Raumverhältnissen sehr einfach und schnell montiert werden kann. Es sind auch drei oder mehr Sacklöcher 32 möglich. Statt dieser Löcher können auch mehreckige Vertiefungen im Endbereich des Bedienkopfs vorgesehen sein, beispielsweise um als Montagewerkzeug einen Inbus- oder Torx-Schüssel oder dergleichen aufzunehmen. Als Sonderform kann die konzentrischen Öffnung 34 so gestaltet sein, dass sie einen Inbus- oder Torx-Schüssel oder dergleichen aufnehmen kann. Ggf. kann auf die Bedienelemente auch vollständig verzichtet werden.

Der schematische Längsschnitt durch die Endkappe 10 in Figur 2 zeigt die Struktur der Endkappe. Sie gliedert sich in einen Bedienkopf 30 und in einen Aufnahmeteil 20. Die gezeigte Endkappe weist, wie bei Figur 1, im Bereich des Bedienkopfs 30 eine konzentrische Öffnung 34 und zwei Sacklöcher 32 auf - deren Zweck ist in der Erklärung zu Figur 1 erläutert. Der Aufnahmeteil 20 weist eine seitliche Schlitzung 22 auf, die sich hier über deutlich mehr als über die Hälfte der Länge des Aufnahmeteils 20 erstreckt. Der Aufnahmeteil 20 kann ein- oder mehrfache seitliche Schlitzungen 22 aufweisen. Der Aufnahmeteil 20 weist dabei bevorzugt einen Innendurchmesser zwischen 4 mm und 12 mm, insbesondere zwischen 6 mm und 9 mm, auf.

Figur 2 zeigt im Endbereich des Aufnahmeteils 20 ein Innengewinde 24, das besonders vorteilhaft als selbstschneidendes Gewinde ausgestaltet sein kann. Dabei kann das Innengewinde 24 nicht nur im Endbereich, sondern auch an anderen Stellen des Aufnahmeteils 20 angeordnet sein, und es können auch mehrere Innengewinde 24 im Aufnahmeteil 20 angebracht werden. Das Innengewinde 24 kann ein- oder mehrgängig gestaltet sein. Am Ende des Aufnahmeteils 20 ist eine Stirnfläche 12 angeordnet, mit der das Verlegerohr dicht abgeschlossen werden kann. Für besonders hohe Dichtigkeitsanforderungen kann an der Stirnfläche 12 zusätzlich ein Dichtelement, insbesondere in Form einer Scheibe, eines Kegels (der ggf. etwas in das Verlegerohr hineinragt) oder eines Rings, angebracht werden (nicht gezeigt in Figur 2).

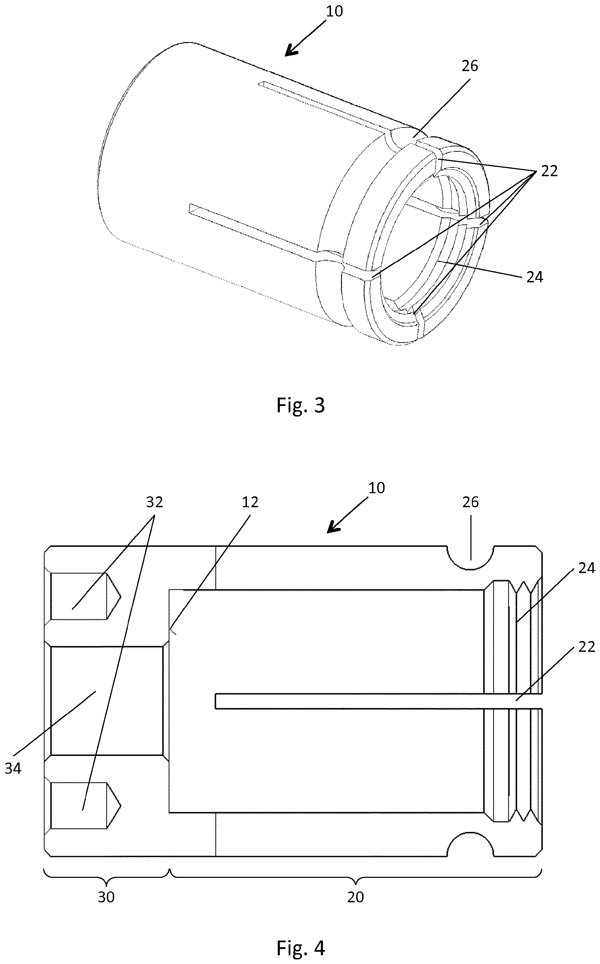

Figur 3 zeigt eine weitere Endkappe 10 mit einer umlaufenden, außenliegenden Nut 26, die zur Aufnahme eines Spannrings geeignet ist. Mit einem derartigen Spannring kann die Passung und die Dichtigkeit der noch weiter gesteigert werden. Der genannte Spannring kann aus Metall oder Kunststoff, bevorzugt aus einem elastischen Kunststoff, insbesondere als Sprengring, ausgeführt werden. Auf Figur 3 ist weiterhin deutlich das Innengewinde 24 zu erkennen. Ferner sind die seitlichen Schlitzungen 22 zu sehen, wobei die dargestellte Endkappe vier derartige Schlitzungen 22 aufweist.

Figur 4 zeigt einen schematischen Längsschnitt durch die Endkappe 10 nach Figur 3, in der Ausführungsform mit einer umlaufenden, außenliegenden Nut 26. Die übrigen Bezugszeichen sind gleich den Bezugszeichen von Figur 2. Auch die Erläuterungen zu Figur 2 gelten analog.

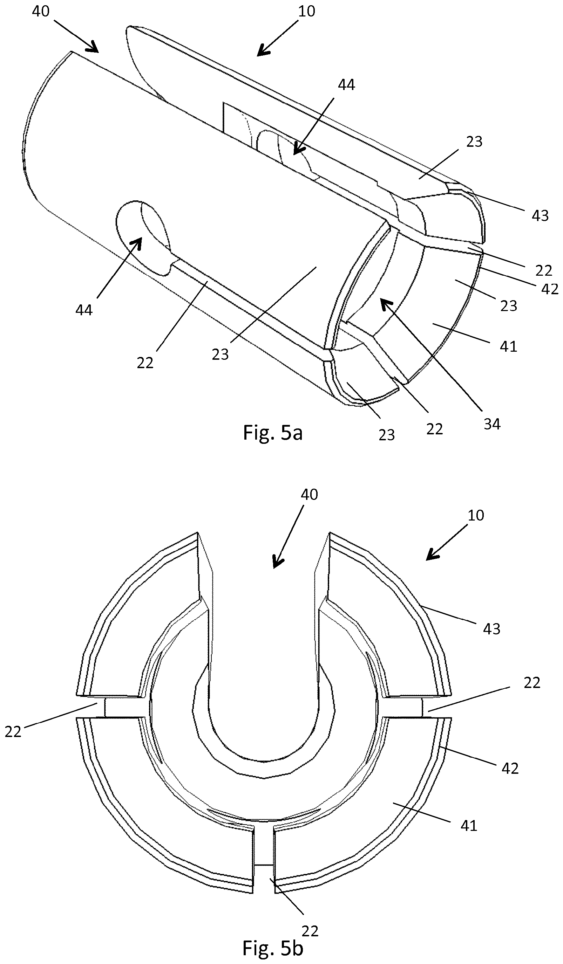

Figur 5 zeigt eine erfindungsgemäße Endkappe 10 mit durchgehender Längsschlitzung 40, welche zusätzlich zu den Teilschlitzungen 22 im Umfang der Endkappe angeordnet ist. Die Schlitzung dient dabei zum seitlichen Einführen eines Kabels, insbesondere eines Glasfaserkabels (nicht dargestellt) und dem anschließenden Anbringen der Endkappe auf dem Verlegerohr. Diese sog. geteilte Variante der Endkappenausführung hat somit den Vorteil, dass die Endkappe auch für bereits "befüllte" Verlegerohre verwendet werden kann.

In der Darstellung der Figur 5 ist ferner auch eine erfindungsgemäße Ausführungsform der Teilschlitzungen 22 gezeigt, bei welchen diese am inneren Abschluss eine Entspannungsbohrung 44 aufweisen, die insbesondere dazu dient, dass die Flexibilität/Elastizität der Stege 23 zwischen den Teilschlitzungen 22 und/oder durchgehenden Schlitzungen 40 einstellbar ist. Dies hat dann den Vorteil, dass durch diese Einstellbarkeit die Vorspannung beim Aufdrehen der Endkappe auf ein Verlegerohr variabel gestaltet werden kann und somit einerseits der Kraftaufwand für die Montage bzw. Demontage bestimmbar ist, bzw. auch die Fixierung der Endkappe mit dem Verlegerohr festgelegt werden kann.

Darüber hinaus zeigt die in Figur 5 dargestellte Ausführungsform eine mit Knickschutz ausgerüstet Öffnung 34, wobei hier der Knickschutz als innenliegender Knickschutztrichter 41 ausgeführt ist. Innenliegend hat hierzu der Trichter eine konvexe Kontur, welche sicher stellt, dass beim Verbiegen des in der Öffnung aufgenommenen Glasfaserkabels dieses nur entlang dessen Konturlinie verbogen werden kann und somit möglichst eine knickende Scherung vermieden wird. Am Endbereich 42 des Trichters 41 geht die innenliegende Kontur mit einer stetigen Krümmung 43 in die Außenkontur der Endkappe (im wesentlichen einer zylindrische Außenkontur) über, so dass keine scharfen Kanten oder dergleichen entstehen. Durch diese Form kann weitgehend sichergestellt werden, dass ein Knickung eines in der Öffnung geführten Glasfaserkabels vermieden werden kann. Ggf. kann diese Art des Knickschutzes auch mit klassischen Kabeltüllen kombiniert werden, welche ggf. auch in die Öffnung 34 hineinragt.

Figur 5b zeigt mit den entsprechenden Bezugszeichen die Ausführungsform aus Figur 5a.

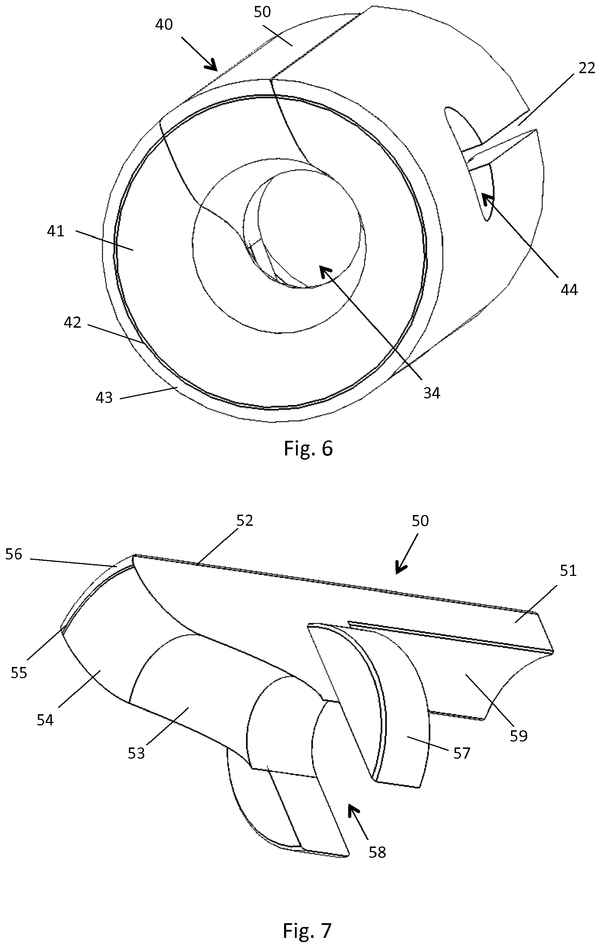

Figur 6 zeigt die Ausführungsform der Figur 6 mit eingelegter Dichtung 50, um die durchgehende seitliche Schlitzung 40 nach dem Einführen eines Kabels abzuschließen und in gewissem Umfang abzudichten, damit möglichst keine Verschmutzung in dem Verlegerohr auftreten kann.

Figur 7 zeigt die Dichtung 50 freigestellt, wobei die Form der Dichtung den inneren und äußeren Konturen der Endkappe angepasst ist. Dabei weißt die Dichtung seitlich einen unteren Steg 51 und einen oberen Steg 52 auf, wobei der untere Steg 51 im westlichen der zylindrischen Grundstruktur der Endkappe und der Form der Schlitzung 40 angepasst ist. Im Bereich des oberen Stegs 52 ist die Form innen der Kontur des Knickschutztrichters angepasst, so dass der Steg 52 hier den unteren Trichterabschnitt 53 und den oberen Trichterabschnitt 54 in dessen Kontur fortführt bzw. ergänzt. Auch der Endbereich 55 und Übergangsbereich 56 sind hier der Außen- und Innenkontur der Endkappe angepasst bzw. schließen die Öffnung des durchgehenden Schlitzes 40. Schließlich umfasst die Dichtung 50 auch noch einen innenliegenden zylindrischen Abschnitt 57 mit eine schlitzartigen Öffnung 58, welche einerseits im Anschluss an die innenliegende Stirnfläche 12 der Endkappe angeordnet ist und durch das Einführen des Verlegerohrs zwischen dessen Endabschnitten und der Stirnfläche der Endkappe geklemmt bzw. fixiert wird. Damit wird nicht nur die Dichtung 50 zum Verlegerohr bewerkstelligt, sondern auch die Fixierung der Dichtung in Bezug auf den Abschluss der seitlichen durchgehenden Schlitzung bereit gestellt.

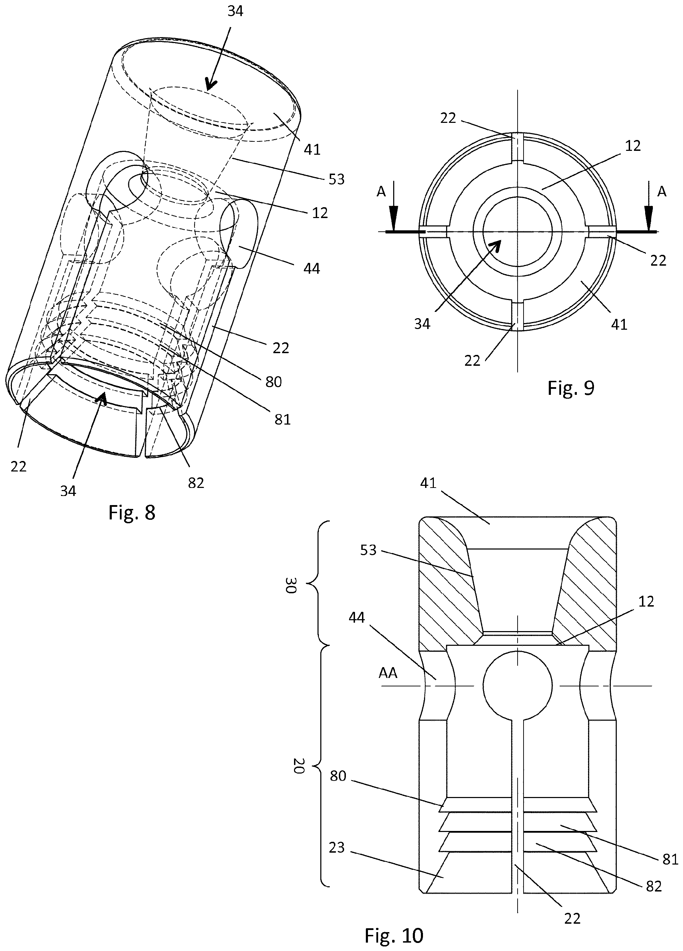

Die Figuren 8 bis 10 zeigen eine weitere Endkappe, bei welcher die formschlüssige Verbindung zwischen Endkappe und Rohr (nicht dargestellt) mittels einer Grippverzahnung bewirkt wird. Hierbei ist auf der Innenseite des Aufnahmebereichs 20 der Endkappe ein scharfkantiges Profil angeordnet, welches über die glatte Innenfläche des Aufnahmebereichs herausragt und beim Einführen des Rohres eine formschlüssige Verbindung mit der äußeren Oberfläche des abzudeckenden Rohrs bildet. Dabei ist es nicht zwingend notwendig, dass eine entsprechende Profilierung auf dem Rohr als Gegenstück vorgesehen ist, sondern die Profilierung ist derart ausgestaltet, dass diese wenigstens teilweise in die Oberfläche des Rohrs eingreift oder an diesem derart anliegt, dass die Endkappe auf dem Rohr fixiert wird. Durch das Aufbringen der Endkappe auf dem Rohrende wird vorzugsweise durch die Profilierung im Aufnahmeabschnitt eine korrespondierende Profilierung in der Außenwandung des Rohrs eingebracht. Darüber hinaus wird diese Grippverzahnung bzw. die Profilierung radial umlaufend und starr ausgeführt, so dass nach dem Aufsetzten der Endkappe diese sicher auf dem Rohrabschnitt fixiert wird.

In den Figuren 8 bis 10 sind ferner gleiche Bauteile wie in den zuvor beschriebenen Figuren mit den gleichen Bezugszeichen versehen.

### Liste der Bezugszeichen

- 10: Endkappe
- 12: Stirnfläche
- 20: Aufnahmeteil
- 22: seitliche Schlitzung
- 23: Steg
- 24: Innengewinde
- 26: umlaufende Nut
- 30: Bedien kopf
- 32: Sacklöcher
- 34: konzentrische Öffnung
- 40: durchlaufender Schlitz
- 41: Knickschutztrichter
- 42/55: Endbereich
- 43: Übergang
- 44: Entspannungsöffnung
- 50: Dichtung / seitlicher Abschluss
- 51/52: unterer und oberer Steg
- 53/54: unterer und oberer Trichterabschnitt
- 56: Übergangsbereich
- 57: Anschlagsabschnitt
- 58: Öffnung
- 59: innerer zylindrischer Abschnitt
- 60: zylinderabschnitt der Öffnung
- 80/81/82: Grippelemente

## Patentansprüche

1. Endkappe, zum wenigstens teilweise Abdecken eines Glasfaser-Verlegerohrs mit einer zylindrischen Grundform, die entlang ihrer Längsachse einen innenliegenden, zylindrischen Aufnahmeabschnitt (20) mit einer endseitigen Stirnfläche (12) und einen Bedienkopf (30) aufweist,
wobei der Aufnahmeabschnitt (20) mindestens eine seitliche, sich nur teilweise über die Mantelhöhe erstreckende Teilschlitzung (22), und auf der Innenseite wenigstens ein Element einer Formschlussverbindung (24, 80, 81, 82) zur Wechselwirkung mit dem abzudeckenden Glasfaser-Verlegerohr aufweist,
wobei der Bedienkopf eine konzentrische Öffnung (34) zur Durchführung des Glasfaserkabels aufweist , wobei die Endkappe dadurch charakterisiert ist, dass die mindestens eine seitliche Teilschlitzung (22) am Endpunkt innerhalb der Mantelkontur eine Entspannungsbohrung (44) aufweist, dass der Aufnahmeabschnitt (20) eine durchgehende seitliche Längsschlitzung (40) aufweist, wobei sich die durchgehende seitliche Längsschlitzung (40) vollständig über die Mantelhöhe der Endkappe (10) erstreckt und zum seitlichen Einführen eines Glasfaserkabels und dem anschließenden Anbringen der Endkappe (10) auf dem Glasfaserverlegerohr ausgestaltet ist, wobei an der innenliegenden Stirnfläche (12) des zylindrischen Aufnahmeabschnitts (20) ein Dichtelement (50), insbesondere in Form einer Scheibe oder eines Rings, angeordnet ist, und
das Dichtelement(50) wenigstens Teile der Längsschlitzung (40) innerhalb der Mantelkontur verschließt und insbesondere an die Mantelinnenkontur der Endkappe (10) angepasst ist.

2. Endkappe nach Anspruch 1,
**dadurch gekennzeichnet, dass**
der Bedienkopf (30) Elemente zur händischen Betätigung wie beispielsweise einen Rändelbereich und/oder zur Betätigung mit einem wenigstens formschlüssig wirkenden Werkzeug aufweist, wobei insbesondere zur formschlüssigen Kraftübertragung wenigstens zwei Bohrungen (32) für einen Zapfenschlüssel und/oder eine Aufnahme für Inbus- oder Torx-Schlüssel oder dergleichen und/oder Abflachungen für einen Gabelschlüssel vorgesehen sind.

3. Endkappe nach einem der vorhergehenden Ansprüche,
**dadurch gekennzeichnet, dass**
der Bedienkopf (30) einen Anschlag für das Glasfaser-Verlegerohr im Aufnahmeabschnitt (20) bildet.

4. Endkappe nach einem der vorhergehenden Ansprüche,
**dadurch gekennzeichnet, dass**
die konzentrische Öffnung (34) als Knickschutztrichter (41) ausgeführt ist, dessen Innenkontur vorzugsweise wenigstens abschnittsweise konvex ist und/oder einen vorgegebenen Biegeradius aufweist.

5. Endkappe nach Anspruch 4,
**dadurch gekennzeichnet, dass**
die Innenkontur des Knickschutztrichters (41) stetig in die Außenkontur der Endkappe (10) übergeht.

6. Endkappe nach einem der Ansprüche 1 - 5,
**dadurch gekennzeichnet, dass**
das Dichtelement (50) eine Öffnung (58) zur Durchführung eines Glasfaserkabels aufweist.

7. Endkappe nach einem der vorherigen Ansprüche,
**dadurch gekennzeichnet, dass**
das Element der Formschlussverbindung (24, 80, 81, 82) im Aufnahmeabschnitt (20) ein Innengewinde, insbesondere zwei, drei oder eine Vielzahl von Innengewinden (24) und/oder ein einfaches oder mehrgängiges Gewinde ist, welches insbesondere als selbstschneidendes Gewinde ausgebildet ist.

8. Endkappe nach einem der Ansprüche 1 bis 6,
**dadurch gekennzeichnet, dass**
das Element der Formschlussverbindung im Aufnahmeabschnitt (20) aus einer Gruppe von Formschlussverbindungen ausgewählt wird, welche Grippverbindungen, Rastverbindungen, Stiftverbindungen, Keilverbindungen, Zahnverbindungen und Kombinationen hiervon aufweist.

9. Endkappe nach einem der vorstehenden Ansprüche
**dadurch gekennzeichnet, dass**
die Formschlussverbindung durch Verbindungselemente im Aufnahmeabschnitt (20) oder im Aufnahmeabschnitt (20) und in einer äußeren Kontur des abzudeckenden Glasfaser-Verlegerohrs bewirkt wird.

10. Endkappe nach einem der vorherigen Ansprüche,
**dadurch gekennzeichnet, dass**
die Endkappe (10) aus Metall oder Kunststoff, bevorzugt aus einem harten Kunststoff wie beispielsweise Polypropylen oder Polyvinylchlorid, aus einer Stahllegierung oder aus Aluminium, insbesondere aus hocheloxiertem Aluminium, gefertigt ist.

11. Endkappe nach einem der vorherigen Ansprüche,
**dadurch gekennzeichnet, dass**
an der Endkappe im Bereich der Aufnahmeöffnung des Aufnahmeabschnitts (20) für das Glasfaser-Verlegrohr eine außenliegende Nut (26), zur Aufnahme eines Spannrings, angeordnet ist.

12. Verwendung einer Endkappe (10) nach einem der vorherigen Ansprüche für ein Glasfaser-Verlegerohr, bevorzugt zum teilweise oder vollständigen Abschluss eines Endabschnitts des Glasfaser-Verlegerohrs und vorzugsweise zur Zugentlastung und/oder zum Knickschutz von Lichtwellenleiterkabeln bzw. zur Abdichtung eines entsprechenden Glasfaser-Verlegerohrs.

## Claims

1. End cap for at least partially covering a glass-fibre laying pipe, with a cylindrical basic shape, having along its longitudinal axis an inner cylindrical receiving section (20), with an end surface (12), and an operator-control head (30), wherein the receiving section (20) has at least one lateral partial slot formation (22) which extends only over part of the height of the lateral surface, and
has on the inner side at least one element of a form-fit connection (24, 80, 81, 82) for interaction with the glass-fibre laying pipe to be covered, wherein the operator-control head has a concentric opening (34) for lead-through of the glass-fibre cable, wherein the end cap is **characterized in that** the at least one lateral partial slot formation (22) has a relief bore (44) at the end point within the lateral-surface contour, **in that** the receiving section (20) has a continuous lateral longitudinal slot formation (40), wherein the continuous lateral longitudinal slot formation (40) extends over the full height of the lateral surface of the end cap (10) and is configured for lateral insertion of a glass-fibre cable and subsequent attachment of the end cap (10) to the glass-fibre laying pipe, wherein a sealing element (50), in particular in the form of a disc or a ring, is arranged on the inner end surface (12) of the cylindrical receiving section (20), and
the sealing element (50) closes off at least parts of the longitudinal slot formation (40) within the lateral-surface contour and is adapted in particular to the lateral-surface inner contour of the end cap (10) .

2. End cap according to Claim 1,
**characterized in that**
the operator-control head (30) has elements for manual actuation, such as for example a knurled region, and/or for actuation by way of a tool which acts at least in a form-fitting manner, wherein, in particular, for form-fitting transmission of force, provision is made of at least two bores (32) for a pin spanner and/or a receptacle for an Allen or Torx key or the like and/or flats for an open-ended spanner.

3. End cap according to either of the preceding claims,
**characterized in that**
the operator-control head (30) forms a stop for the glass-fibre laying pipe in the receiving section (20) .

4. End cap according to one of the preceding claims,
**characterized in that**
the concentric opening (34) is configured as an anti-kink funnel (41), the inner contour of which preferably is at least sectionally convex and/or has a predefined bending radius.

5. End cap according to Claim 4,
**characterized in that**
the inner contour of the anti-kink funnel (41) transitions into the outer contour of the end cap (10) in a continuous manner.

6. End cap according to one of Claims 1-5,
**characterized in that**
the sealing element (50) has an opening (58) for lead-through of a glass-fibre cable.

7. End cap according to one of the preceding claims,
**characterized in that**
the element of the form-fit connection (24, 80, 81, 82) in the receiving section (20) is an internal thread, in particular two, three or more internal threads (24), and/or a single-start or multiple-start thread, which is designed in particular as a self-tapping thread.

8. End cap according to one of Claims 1 to 6,
**characterized in that**
the element of the form-fit connection in the receiving section (20) is selected from a group of form-fit connections that comprises gripping connections, latching connections, pin connections, wedge connections, toothed connections and combinations thereof.

9. End cap according to one of the preceding claims,
**characterized in that**
the form-fit connection is effected by connection elements in the receiving section (20) or in the receiving section (20) and in an outer contour of the glass-fibre laying pipe to be covered.

10. End cap according to one of the preceding claims,
**characterized in that**
the end cap (10) is manufactured from metal or plastic, preferably from a hard plastic, such as for example polypropylene or polyvinyl chloride, from a steel alloy or from aluminium, in particular from highly anodized aluminium.

11. End cap according to one of the preceding claims,
**characterized in that**
an outer groove (26) for receiving a clamping ring is arranged on the end cap in the region of the receiving opening of the receiving section (20) for the glass-fibre laying pipe.

12. Use of an end cap (10) according to one of the preceding claims for a glass-fibre laying pipe, preferably for partially or completely closing off an end section of the glass-fibre laying pipe, and preferably for strain relief and/or for protection against kinking of fibre-optic cables or for sealing off a corresponding glass-fibre laying pipe.

## Revendications

1. Capuchon d'extrémité, destiné à recouvrir au moins partiellement une conduite de raccordement en fibre de verre avec une forme de base cylindrique qui présente le long de son axe longitudinal une section de logement (20) cylindrique et située à l'intérieur avec une surface frontale (12) côté extrémité et une tête de commande (30),
dans lequel la section de logement (20) présente au moins un rainurage partiel (22) latéral s'étendant uniquement partiellement sur la hauteur d'enveloppe, et
sur le côté intérieur au moins un élément d'une liaison par complémentarité de forme (24, 80, 81, 82) pour l'interaction avec la conduite de raccordement en fibre de verre à recouvrir,
dans lequel la tête de commande présente une ouverture (34) concentrique pour le passage du câble en fibre de verre, dans lequel le capuchon d'extrémité est **caractérisé en ce que** le au moins un rainurage partiel (22) latéral présente un alésage de détente (44) au niveau du point d'extrémité à l'intérieur du contour d'enveloppe, **en ce que** la section de logement (20) présente un rainurage longitudinal (40) latéral continu,
dans lequel le rainurage longitudinal (40) latéral continu s'étend entièrement sur la hauteur d'enveloppe du capuchon d'extrémité (10) et est conçu pour l'insertion latérale d'un câble en fibre de verre et la pose ultérieure du capuchon d'extrémité (10) sur la conduite de raccordement en fibre de verre, dans lequel
au niveau de la surface frontale (12) située à l'intérieur de la section de logement (20) cylindrique est agencé un élément d'étanchéité (50), en particulier sous la forme d'une rondelle ou d'un anneau, et
l'élément d'étanchéité (50) ferme au moins des parties du rainurage longitudinal (40) à l'intérieur du contour d'enveloppe et en particulier est ajusté au contour intérieur d'enveloppe du capuchon d'extrémité (10).

2. Capuchon d'extrémité selon la revendication 1,
**caractérisé en ce que**
la tête de commande (30) présente des éléments pour l'actionnement manuel comme par exemple une zone de moletage et/ou pour l'actionnement avec un outil agissant au moins par complémentarité de forme, dans lequel en particulier pour la transmission de force par complémentarité de forme sont prévus au moins deux alésages (32) pour une clé à ergot et/ou un logement pour des clés Allen ou Torx ou analogue et/ou des méplats pour une clé à fourche.

3. Capuchon d'extrémité selon l'une des revendications précédentes, **caractérisé en ce que**
la tête de commande (30) forme une butée pour la conduite de raccordement en fibre de verre dans la section de logement (20).

4. Capuchon d'extrémité selon l'une des revendications précédentes, **caractérisé en ce que**
l'ouverture (34) concentrique est réalisée en tant que cône de protection anti-pliage (41) dont le contour intérieur est de préférence au moins partiellement convexe et/ou présente un rayon de courbure prédéfini.

5. Capuchon d'extrémité selon la revendication 4,
**caractérisé en ce que**
le contour intérieur du cône de protection anti-pliage (41) est en continuité constante avec le contour extérieur du capuchon d'extrémité (10).

6. Capuchon d'extrémité selon l'une des revendications 1-5,
**caractérisé en ce que**
l'élément d'étanchéité (50) présente une ouverture (58) pour la traversée d'un câble en fibre de verre.

7. Capuchon d'extrémité selon l'une des revendications précédentes, **caractérisé en ce que**
l'élément de la liaison par complémentarité de forme (24, 80, 81, 82) dans la section de logement (20) est un filetage intérieur, en particulier deux, trois ou une pluralité de filetages intérieurs (24) et/ou un filetage simple ou à pas multiples, lequel est en particulier conçu en tant que filetage autotaraudeur.

8. Capuchon d'extrémité selon l'une des revendications 1 à 6,
**caractérisé en ce que**
l'élément de la liaison par complémentarité de forme dans la section de logement (20) est sélectionné dans un groupe de liaisons par complémentarité de forme, lequel présente des liaisons par grippage, des liaisons par accrochage, des liaisons par broche, des liaisons par clavette, des liaisons à denture et des combinaisons de celles-ci.

9. Capuchon d'extrémité selon l'une des revendications précédentes, **caractérisé en ce que**
la liaison par complémentarité de forme est provoquée par des éléments de liaison dans la section de logement (20) ou dans la section de logement (20) et dans un contour extérieur de la conduite de raccordement en fibre de verre à recouvrir.

10. Capuchon d'extrémité selon l'une des revendications précédentes, **caractérisé en ce que**
le capuchon d'extrémité (10) est fabriqué en métal ou en matière plastique, de préférence dans une matière plastique dure comme par exemple le polypropylène ou le polychlorure de vinyle, dans un alliage d'acier ou en aluminium, en particulier dans un aluminium hautement anodisé.

11. Capuchon d'extrémité selon l'une des revendications précédentes, **caractérisé en ce que**
une rainure (26) située à l'extérieur est agencée contre le capuchon d'extrémité dans la zone de l'ouverture de logement de la section de logement (20) pour la conduite de raccordement en fibre de verre, pour le logement d'une bague de serrage.

12. Utilisation d'un capuchon d'extrémité (10) selon l'une des revendications précédentes pour une conduite de raccordement en fibre de verre, de préférence pour la fermeture partielle ou complète d'une section d'extrémité de la conduite de raccordement en fibre de verre et de préférence pour la décharge de traction et/ou pour la protection anti-pliage de câbles de fibres optiques ou pour l'étanchéité d'une conduite de raccordement en fibre de verre correspondante.
